# EUROPEAN PATENT SPECIFICATION

(11) **EP 2 906 796 B1**
(45) Date of publication and mention of the grant of the patent: **27.11.2019**
(21) Application number: 13845676.9
(22) Date of filing: 09.10.2013
(51) Int. Cl.: F02C 6/00, F02C 9/00, G01M 15/04

(54) **ENGINE MONITOR FOR A MULTI-ENGINE SYSTEM**
MOTORMONITOR FÜR MEHRMOTORIGES SYSTEM
DISPOSITIF DE CONTRÔLE DE MOTEUR POUR UN SYSTÈME À MOTEURS MULTIPLES

(30) Priority: 09.10.2012 US 201213647964
(43) Date of publication of application: 19.08.2015
(73) Proprietor: United Technologies Corporation, Farmington, CT 06032 (US)
(72) Inventor: VOLPONI, Allan J., West Simsbury, Connecticut 06092 (US); BUTLER, Steven W., Columbia, Connecticut 06237 (US)
(74) Representative: Dehns
(86) International application number: PCT/US2013/064099
(87) International publication number: WO 2014/059000

(56) References cited:
- WO-A1-2008/140363
- US-A- 5 927 655
- US-A1- 2003 200 069
- US-A1- 2006 047 512
- US-A1- 2008 125 930
- US-A1- 2008 147 361
- US-A1- 2008 154 823
- US-A1- 2009 276 136

## Description

### BACKGROUND OF THE INVENTION

### 1. Technical Field

This disclosure relates generally to a multi-engine system and, more particularly, to an engine monitor for a multi-engine system such as, for example, an aircraft propulsion system with a plurality of companion gas turbine engines.

### 2. Background Information

Various systems have been developed to monitor parameters of an engine. An aircraft propulsion system, for example, may include an engine health monitor that determines whether an engine fault has occurred within one or more components of a gas turbine engine. The term "engine fault" may describe an abrupt or gradual event that causes the one or more engine components to operate, for example, outside of predicted or limit boundaries; e.g., above a command or maximum thrust level, or below a command or minimum exhaust temperature. An engine fault event may be caused by, for example, foreign object damage (FOD) such as bird impact, domestic object damage (DOD) such as blade out, a bleed leak or failure, variable geometry anomalies such as a Compressor Variable Stator Vane (VSV) position error, actuator failure, sensor failure, etc.

An engine monitor may detect an engine fault by detecting an abrupt shift in engine operation during steady-state conditions; e.g., during aircraft cruise. The engine monitor, for example, may collect "snapshots" of engine parameters during steady-state conditions (e.g., during cruise) over a plurality of aircraft flights and for a plurality of similar engines within an airline fleet. The most recent snapshot may be compared to long and/or short term averages of the collected snapshots to determine whether one or more of the parameters are diverging from the averages. If one or more of the parameters are diverging, the engine health monitor may determine a fault has occurred within the engine. The engine health monitor may subsequently compare a signature of the parameters of the divergent snapshot to known fault parameter signatures to identify the engine fault. Such an engine health monitor, however, is typically land base and therefore cannot detect an engine fault during the course of an aircraft flight. In addition, such an engine health monitor typically cannot be utilized to detect an engine fault during transient conditions; e.g., during aircraft takeoff, landing, ascent, or descent.

There is a need in the art for an improved engine monitor. US2006047512 discloses a system, a device, and methods for updating system-monitoring models.

### SUMMARY OF THE DISCLOSURE

According to an aspect of the invention, an engine monitor (e.g., an engine health monitor) is provided for a first engine that receives first control data and a second engine that receives second control data. The engine monitor includes a first tuned modeling unit, a second tuned modeling unit and a monitoring unit. The first tuned modeling unit models dynamics of the first engine by processing the first control data with a first engine model to provide modeled first engine parameter data. The first tuned modeling unit also at least partially adjusts the modeled first engine parameter data for model error in the first engine model to provide first tuned parameter data. The second tuned modeling unit models dynamics of the second engine by processing the second control data with a second engine model to provide modeled second engine parameter data. The second tuned modeling unit also at least partially adjusts the modeled second engine parameter data for model error in the second engine model to provide second tuned parameter data. The monitoring unit correlates the first tuned parameter data and the second tuned parameter data to monitor operation of the first engine and the second engine.

According to another aspect of the invention, a multi-engine system is provided that includes a plurality of companion engines, which include a first engine that is controlled by first control data and a second engine that is controlled by second control data. The multi-engine system also includes a first tuned modeling unit, a second tuned modeling unit and a monitoring unit. The first tuned modeling unit models dynamics of the first engine by processing the first control data with a first engine model to provide modeled first engine parameter data. The first tuned modeling unit also at least partially adjusts the modeled first engine parameter data for model error in the first engine model to provide first tuned parameter data. The second tuned modeling unit models dynamics of the second engine by processing the second control data with a second engine model to provide modeled second engine parameter data. The second tuned modeling unit also at least partially adjusts the modeled second engine parameter data for model error in the second engine model to provide second tuned parameter data. The monitoring unit correlates the first tuned parameter data and the second tuned parameter data to monitor operation of the first engine and the second engine.

The multi-engine system may be configured as an aircraft propulsion system. The first engine may be configured as a gas turbine engine. The second engine may be configured as a gas turbine engine.

The engine monitor and/or the multi-engine system may include a first tuning unit and/or a second tuning unit. The first tuning unit provides first tuner data based on the first control data. The second tuning unit provides second tuner data based on the second control data. The first tuned modeling unit may process the modeled first engine parameter data with the first tuner data to provide the first tuned parameter data. The second tuned modeling unit may process the modeled second engine parameter data with the second tuner data to provide the second tuned parameter data.

The first tuning unit may be configured as an empirical first tuning unit. The second tuning unit may be configured as an empirical second tuning unit.

The monitoring unit may correlate the first tuned parameter data and the second tuned parameter data by processing the first tuned parameter data with measured first engine parameter data to provide first residual data, processing the second tuned parameter data with measured second engine parameter data to provide second residual data, and processing the first residual data and the second residual data to provide engine correlation data.

The monitoring unit may compare the engine correlation data to threshold data. The monitoring unit may determine whether a fault has occurred during operation of the first engine and the second engine where one or more data points of the engine correlation data are greater than and/or less than one or more corresponding data points of the threshold data.

The engine monitor and/or the multi-engine system may include a third tuned modeling unit, a first summer and/or a first feedback tuning unit. The third tuned modeling unit models the dynamics of the first engine by processing the first control data and first feedback tuner data with a third engine model to provide additional modeled first engine parameter data. The third tuned modeling unit also at least partially adjusts the additional modeled first engine parameter data for model error in the third engine model to provide third tuned parameter data. The first summer processes the third tuned parameter data and the measured first engine parameter data to provide third residual data. The first feedback tuning unit processes the third residual data to provide the first feedback tuner data. The monitoring unit may process the first feedback tuner data to determine whether the fault is occurring within the first engine.

The engine monitor and/or the multi-engine system may include a fourth tuned modeling unit, a second summer and/or a second feedback tuning unit. The fourth tuned modeling unit models the dynamics of the second engine by processing the second control data and second feedback tuner data with a fourth engine model to provide additional modeled second engine parameter data. The fourth tuned modeling unit also at least partially adjusts the additional modeled second engine parameter data for model error in the fourth engine model to provide fourth tuned parameter data. The second summer processes the fourth tuned parameter data and the measured second engine parameter data to provide fourth residual data. The second feedback tuning unit processes the fourth residual data to provide the second feedback tuner data. The monitoring unit may process the second feedback tuner data to determine whether the fault is occurring within the second engine.

The first feedback tuning unit may be configured as a first Kalman filter observer. The second feedback tuning unit may be configured as a second Kalman filter observer.

The engine monitor and/or the multi-engine system may include a first tuning unit that provides first tuner data based on the first control data. The third tuned modeling unit may process the additional modeled first engine parameter data with the first tuner data to provide the third tuned parameter data.

The monitoring unit may identify the fault based on a signature of the engine correlation data.

The engine monitor and/or the multi-engine system may include one or more first sensors adapted to be arranged with the first engine, and that provide the measured first engine parameter data. The engine monitor and/or the multi-engine system may include one or more second sensors adapted to be arranged with the second engine, and that provide the measured second engine parameter data.

The monitoring unit may correlate the first and the second tuned parameter data to monitor the operation of the first and the second engines during transient conditions. The monitoring unit may process the modeled first engine parameter data and the measured first engine parameter data to provide first residual data. The monitoring unit may process the modeled second engine parameter data and the measured second engine parameter data to provide second residual data. The monitoring unit may process the first and the second residual data to monitor the operation of the first engine and the second engine during steady-state conditions.

According to another aspect of the invention, a method is provided for monitoring a first engine that receives first control data and a second engine that receives second control data. The method includes modeling dynamics of the first engine by processing the first control data with a first engine model to provide modeled first engine parameter data. The modeled first engine parameter data is at least partially adjusted for model error in the first engine model to provide first tuned parameter data. Dynamics of the second engine are modeled by processing the second control data with a second engine model to provide modeled second engine parameter data. The modeled second engine parameter data is at least partially adjusted for model error in the second engine model to provide second tuned parameter data. The first tuned parameter data and the second tuned parameter data are correlated to monitor operation of the first and the second engines. The modeling, the adjusting and the correlating may be performed by an engine monitor that includes one or more processors.

The first and the second engines may be companion engines of, for example, an aircraft propulsion system. The first engine may be configured as a first turbine engine. The second engine may be configured as a second turbine engine.

Empirical first tuner data may be provided based on the first control data. The modeled first engine parameter data may be processed with the first tuner data to provide the first tuned parameter data. Empirical second tuner data may be provided based on the second control data. The modeled second engine parameter data may be processed with the second tuner data to provide the second tuned parameter data.

The correlating may include processing the first tuned parameter data with measured first engine parameter data to provide first residual data. The correlating may include processing the second tuned parameter data with measured second engine parameter data to provide second residual data. The correlating may also include processing the first residual data and the second residual data to provide engine correlation data. The measured first engine parameter data may be received from one or more first sensors arranged with (e.g., included in) the first engine. The measured second engine parameter data may be received from one or more second sensors arranged with (e.g., included in) the second engine.

The engine correlation data may be compared to threshold data. A fault may be determined to be occurring during operation of the first engine and the second engine where one or more data points of the engine correlation data are at least one of greater than and less than one or more corresponding data points of the threshold data.

The dynamics of the first engine may be modeled by processing the first control data and first feedback tuner data with a third engine model to provide additional modeled first engine parameter data. The additional modeled first engine parameter data may be at least partially adjusted for model error in the third engine model to provide third tuned parameter data. The third tuned parameter data and the measured first engine parameter data may be processed to provide third residual data. The third residual data may be processed with a Kalman filter observer to provide the first feedback tuner data. The first feedback tuner data may be processed to determine whether the fault is occurring within the first engine.

The fault may be identified based on a signature of the engine correlation data.

The modeled first engine parameter data and the measured first engine parameter data may be processed to provide first residual data. The modeled second engine parameter data and the measured second engine parameter data may be processed to provide second residual data. The first residual data and the second residual data may be correlated to monitor the operation of the first engine and the second engine during, for example, steady-state conditions. The correlating of the first tuned parameter data and the second tuned parameter data may be performed to monitor operation of the first engine and the second engine during, for example, transient conditions.

The foregoing features and the operation of the invention will become more apparent in light of the following description and the accompanying drawings.

### BRIEF DESCRIPTION OF THE DRAWINGS

FIG. 1 is a schematic illustration of a multi-engine system;
FIG. 2 illustrate a flow diagram of a method for operating the multi-engine system of FIG. 1;
FIG. 3 is a schematic illustration of an engine monitor for the multi-engine system of FIG. 1;
FIGS. 4A and 4B illustrate a flow diagram of a method for operating the engine monitor of FIG. 3;
FIG. 5 is a schematic illustration of another engine monitor for the multi-engine system of FIG. 1;
FIG. 6 illustrates a flow diagram of a method for identifying in which engine a detected fault is occurring;
FIG. 7 is a schematic illustration of still another engine monitor for the multi-engine system of FIG. 1; and
FIG. 8 illustrates a flow diagram of a method for operating the engine monitor of FIG. 7.

### DETAILED DESCRIPTION OF THE INVENTION

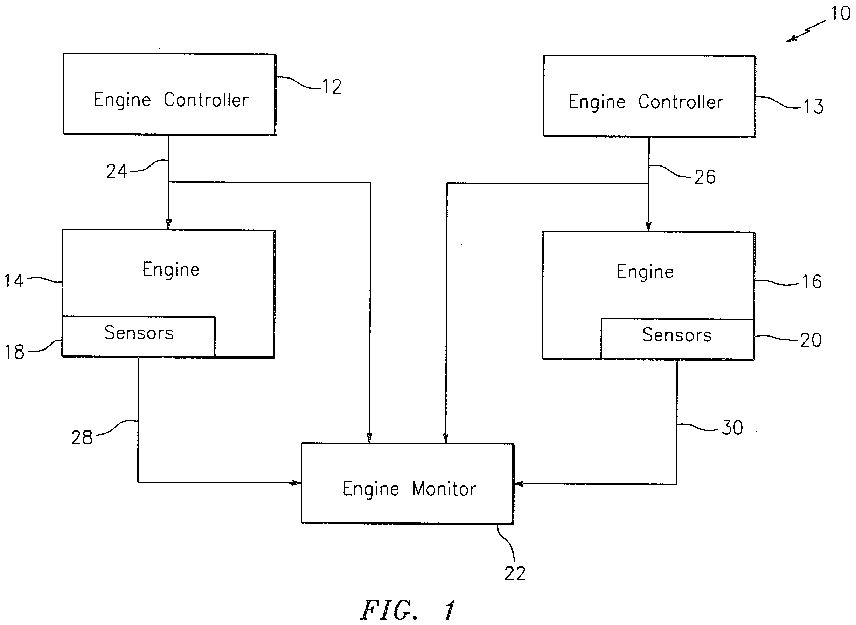

FIG. 1 illustrates a multi-engine system 10 such as, for example, an aircraft propulsion system. The multi-engine system 10 includes a plurality of engine controllers 12 and 13, a plurality of engines 14 and 16, a plurality of sensors 18 and 20, and an engine monitor 22. An example of an engine is a gas turbine engine. The first and the second engines 14 and 16, for example, may be companion engines arranged on either side of an aircraft fuselage or connected to an aircraft wing. Examples of a sensor include a pressure sensor, a temperature sensor, a shaft speed sensor, a vibration sensor, an actuator position sensor, an accelerometer, etc.

The first engine controller 12 is configured in signal communication (e.g., hardwired or wirelessly connected) with the first engine 14 and the engine monitor 22. The second engine controller 13 is configured in signal communication with the second engine 16 and the engine monitor 22. The sensors 18 and 20 are configured in signal communication with the engine monitor 22. One or more of the engine sensors 18 are arranged with (e.g., included in) the first engine 14. One or more of the engine sensors 20 are arranged with the second engine 16.

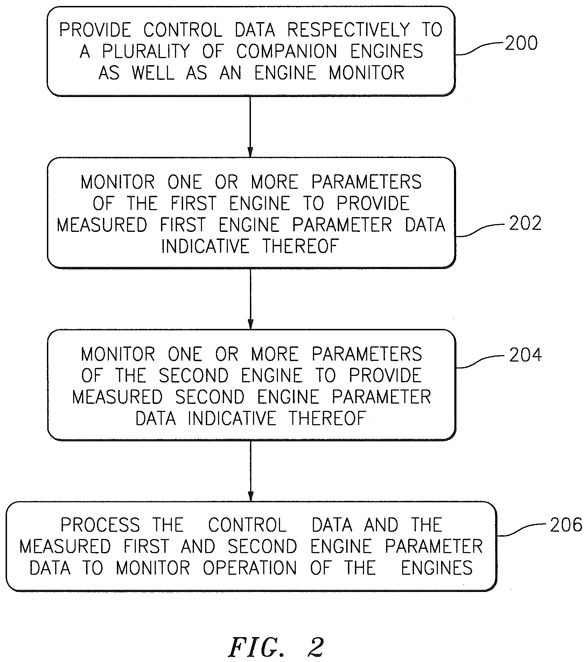

FIG. 2 illustrates a flow diagram of a method for operating the multi-engine system 10 of FIG. 1. In step 200, the first engine controller 12 provides first control data 24 to the first engine 14 to control operation of the engine 14, and the second engine controller 13 provides second control data 26 to the second engine 16 to control operation of the engine 16. The engine controllers 12 and 13 also respectively provide the first and the second control data 24 and 26 to the engine monitor 22. The first and the second control data 24 and 26 may each include one or more commands. An example of a command is a signal to operate an engine at a certain parameter value; e.g., thrust level. The term "parameter" may describe a physical state of the engine, an environmental condition of the engine, and/or an environmental condition in which the engine is operating. Examples of a physical state include a variable geometry position such as a variable stator vane position, a throttle position, a thrust level, a shaft speed, an engine vibration level, an engine stability bleed level, an engine accessory bleed level, etc. Examples of an environmental condition include temperature, pressure, Mach number, altitude, etc.

In step 202, one or more of the first sensors 18 monitor the physical state of the first engine 14, the environmental conditions of the first engine 14, and/or the environmental conditions in which the first engine 14 is operating, and provide measured first engine parameter data 28 indicative thereof to the engine monitor 22. The measured first engine parameter data 28 includes one or more parameter values, which may correspond to one or more of the parameter values of the first control data 24.

In step 204, one or more of the second sensors 20 monitor the physical state of the second engine 16, the environmental conditions of the second engine 16, and/or the environmental conditions in which the second engine 16 is operating, and provide measured second engine parameter data 30 indicative thereof to the engine monitor 22. The measured second engine parameter data 30 includes one or more parameter values, which may correspond to one or more of the parameter values of the second control data 26.

In step 206, the engine monitor 22 processes the first control data 24, the second control data 26, the measured first engine parameter data 28, and the measured second engine parameter data 30 to monitor operation of the first engine 14 and/or the second engine 16 during transient and/or steady-state conditions. The engine monitor 22, for example, may detect whether an engine fault has occurred during engine operation, may determine in which engine 14 or 16 the fault has occurred, and/or may identify the detected fault. The term "transient" may describe operating conditions where one or more of the commands and/or the parameters frequently change such as, for example, during aircraft takeoff, aircraft landing, aircraft ascent, aircraft descent, etc. The term "steady-state" may describe conditions where a majority of the commands and/or the parameters are substantially constant such as, for example, during aircraft cruise (e.g., substantially level flight).

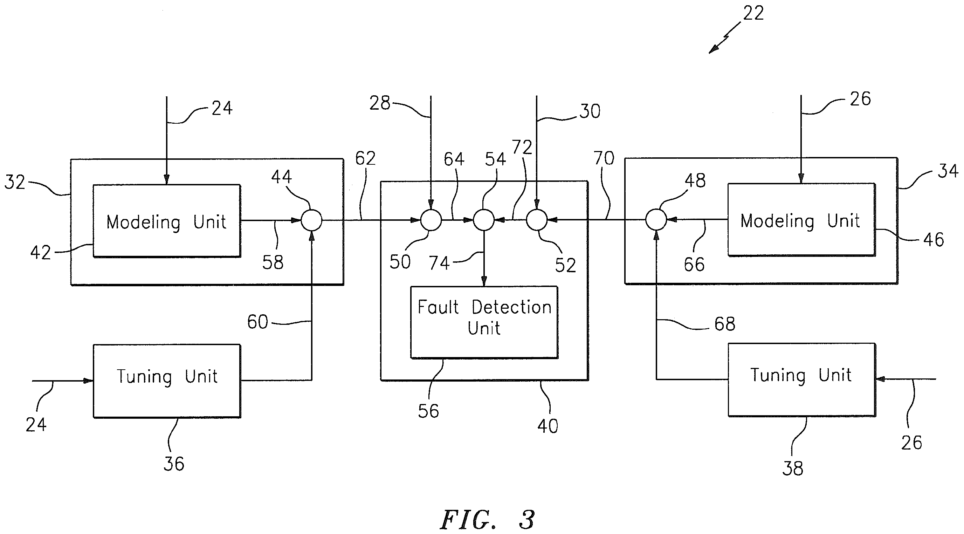

Referring to FIG. 3, the engine monitor 22 includes a first tuned modeling unit 32, a second tuned modeling unit 34, a (e.g., empirical) first tuning unit 36, a (e.g., empirical) second tuning unit 38, and a monitoring unit 40. The first tuned modeling unit 32 may include a first modeling unit 42 and a summer 44. The second tuned modeling unit 34 may include a second modeling unit 46 and a summer 48. The monitoring unit 40 may include one or more summers 50, 52 and 54 and a fault detection unit 56.

The modeling unit 42 and the tuning unit 36 are each configured in signal communication with the first engine controller 12 (see FIG. 1). The modeling unit 46 and the tuning unit 38 are each configured in signal communication with the second engine controller 13 (see FIG. 1). The summer 44 is configured in signal communication with the first modeling unit 42 and the first tuning unit 36. The summer 48 is configured in signal communication with the second modeling unit 46 and the second tuning unit 38. The summer 50 is configured in signal communication with the summer 44 and the first sensors 18 (see FIG. 1). The summer 52 is configured in signal communication with the summer 48 and the second sensors 20 (see FIG. 1). The summer 54 is configured in signal communication with the summers 50 and 52 and the fault detection unit 56.

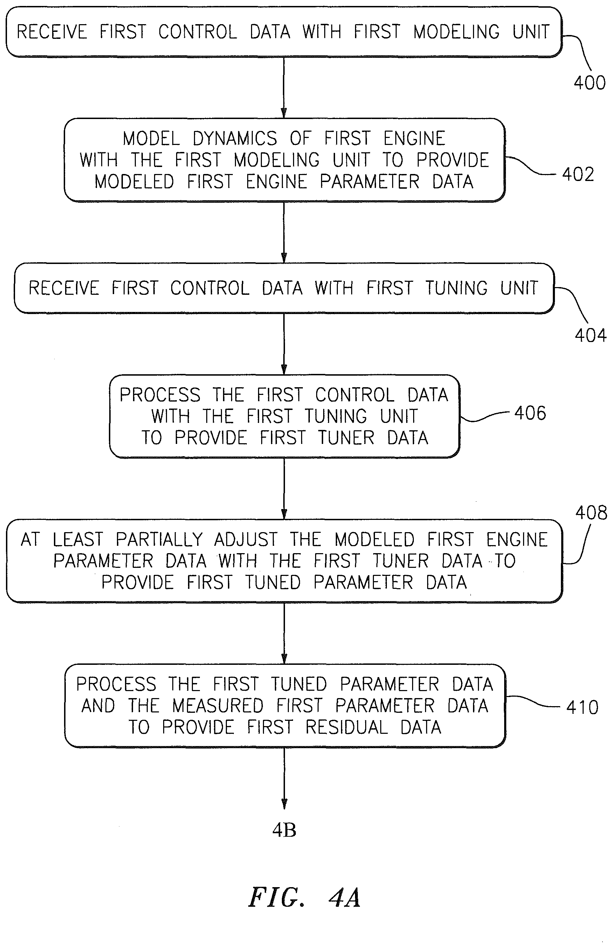

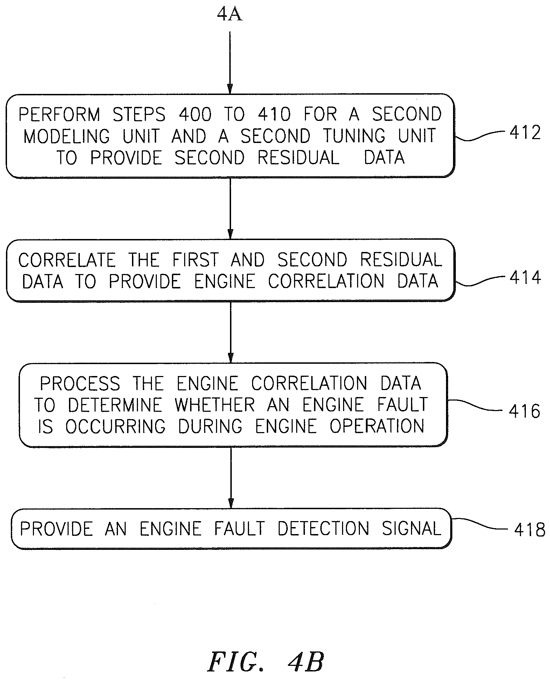

FIGS. 4A and 4B illustrate a flow diagram of a method for operating the engine monitor 22 of FIG. 3 during, for example, transient conditions. In step 400, the first modeling unit 42 receives the first control data 24. In step 402, the first modeling unit 42 models dynamics of the first engine 14 by processing the received first control data 24 with a first engine model to provide modeled first engine parameter data 58. The first engine model, for example, may be a physics-based state variable model (SVM), a physics-based non-linear model or an artificial neural network (ANN) model that models how the first engine 14 will respond to the first control data 24. Based on this modeled response (e.g., the modeled dynamics of the first engine 14), the first engine model provides modeled predictions of, for example, one or more of the parameter values that are measured by the first sensors 18 and included in the measured first engine parameter data 28. The modeled first engine parameter data 58 includes these modeled predictions of the one or more of the parameter values.

In step 404, the first tuning unit 36 receives the first control data 24, or alternatively a subset of the first control data 24. In step 406, the first tuning unit 36 processes the first control data 24 with, for example, a first empirical engine model to provide (e.g., empirical) first tuner data 60. The first empirical engine model may be derived by determining differences (e.g., deltas) between the modeled first engine parameter data 58 and the measured first engine parameter data 28 during, for example, initial operation of the first engine 14. The first empirical engine model may be implemented with, for example, a regression model, an auto-regressive moving average (ARMA) model, an artificial neural network (ANN) model, etc. The first tuner data 60 includes one or more of those differences that correspond to the first control data 24 received by the first modeling unit 42 and the first engine 14.

In step 408, the summer 44 at least partially adjusts the modeled first engine parameter data 58 for model error in the first engine model to provide first tuned parameter data 62. The summer 44, for example, adds the first tuner data 60 to the modeled first engine parameter data 58 to provide the first tuned parameter data 62. The first tuned parameter data 62 includes the parameter values of the modeled first engine parameter data 58, which are biased with the first tuner data 60 to more closely match one or more of the parameter values of the measured first engine parameter data 28.

In step 410, the summer 50 processes the first tuned parameter data 62 and the measured first engine parameter data 28 to provide first residual data 64. The summer 50, for example, subtracts the first tuned parameter data 62 from the measured first engine parameter data 28 to provide the first residual data 64.

In step 412, the steps 400 to 410 are respectively performed for the second modeling unit 46, the second tuning unit 38 and the summers 48 and 52. The second modeling unit 46, for example, receives the second control data 26. The second modeling unit 46 models dynamics of the second engine 16 by processing the received second control data 26 with a second engine model to provide modeled second engine parameter data 66 in a similar manner as described above with respect to the step 402. The second tuning unit 38 receives the second control data 26, or alternatively a subset of the second control data 26. The second tuning unit 38 processes the second control data 26 with, for example, a second empirical engine model to provide (e.g., empirical) second tuner data 68 in a similar manner as described above with respect to the step 406. The summer 48 at least partially adjusts the modeled second engine parameter data 66 for model error in the second engine model to provide second tuned parameter data 70 in a similar manner as described above with respect to the step 408. The summer 52 processes the second tuned parameter data 70 and the measured second engine parameter data 30 to provide second residual data 72 in a similar manner as described above with respect to the step 410.

In step 414, the summer 54 correlates the first residual data 64 with the second residual data 72 to provide engine correlation data 74. The summer 54, for example, subtracts the first residual data 64 from the second residual data 72 to provide the engine correlation data 74. Correlating the residual data 64 and 72, rather than the engine parameter data 28 and 30, enables the engine monitor 22 to reduce or eliminate performance differences, sensor error differences, plug class differences, power level differences and/or other differences between the first and the second engines 14 and 16. In some embodiments, therefore, data points of the engine correlation data 74 may have values substantially equal to zero (0) where, for example, the engines 14 and 16 are operating under ideal operating conditions.

In step 416, the fault detection unit 56 processes the engine correlation data 74 to determine whether a fault is occurring during engine 14, 16 operation. The fault detection unit 56, for example, compares the engine correlation data 74 to threshold data. Where one or more data points of the engine correlation data 74 is greater than and/or less than corresponding data points of the threshold data (e.g., the engine correlation data 74 is diverging from zero), the fault detection unit 56 may determine a fault is occurring within one of the engines 14 and 16. Where one or more data points of the engine correlation data 74 is substantially equal to or within a range of corresponding data points of the threshold data, the fault detection unit 56 may determine the engines 14 and 16 are operating without faults. In some embodiments, the threshold data may be predetermined. In other embodiments, the threshold data may be dynamically determined based from, for example, an average of the correlation data over a number of previous iterations of the method of FIG. 4.

In step 418, the fault detection unit 56 provides a fault detection signal where the engine correlation data 74 is determined to be diverging from the threshold data.

In some embodiments, the fault detection unit 56 may determine a fault is occurring within one of the engines 14 and 16 where one or more of the data points of the engine correlation data 74 diverge from zero by more than a threshold amount for a single iteration of the method of FIG. 4. In other embodiments, the fault detection unit 56 may determine a fault is occurring within one of the engines 14 and 16 where one or more data points of the engine correlation data 74 diverge from zero by more than a threshold amount for a plurality of iterations of the method of FIG. 4. In this manner, the fault detection unit 56 may reduce the likelihood of providing a false positive fault detection by establishing persistency of the derivation of the engine correlation data 74.

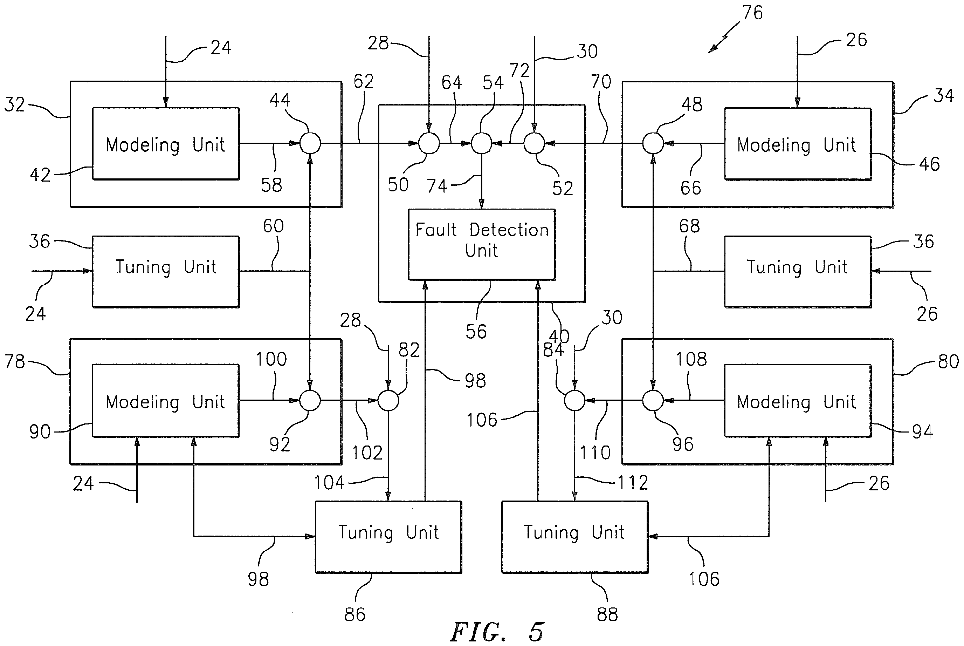

FIG. 5 illustrates an alternative embodiment engine monitor 76 for the multi-engine system 10 of FIG. 1. In contrast to the engine monitor 22 of FIG. 3, the engine monitor 76 further includes a third tuned modeling unit 78, a fourth tuned modeling unit 80, plurality of summers 82 and 84, a first feedback tuning unit 86 (e.g., a Kalman filter observer, an artificial neural network, etc.) and a second feedback tuning unit 88 (e.g., a Kalman filter observer, an artificial neural network, etc.). The third tuned modeling unit 78 may include a third modeling unit 90 and a summer 92. The fourth tuned modeling unit 80 may include a fourth modeling unit 94 and a summer 96.

The modeling units 90 and 94 are configured respectively in signal communication with the engine controllers 12 and 13 (see FIG. 1). The summer 92 is configured in signal communication with the first tuning unit 36 and the third modeling unit 90. The summer 82 is configured in signal communication with the summer 92 and the first sensors 18 (see FIG. 1). The first feedback tuning unit 86 is configured in signal communication with the summer 82, the third modeling unit 90 and the fault detection unit 56. The summer 96 is configured in signal communication with the second tuning unit 38 and the fourth modeling unit 94. The summer 84 is configured in signal communication with the summer 96 and the second sensors 20 (see FIG. 1). The second feedback tuning unit 88 is configured in signal communication with the summer 84, the fourth modeling unit 94 and the fault detection unit 56.

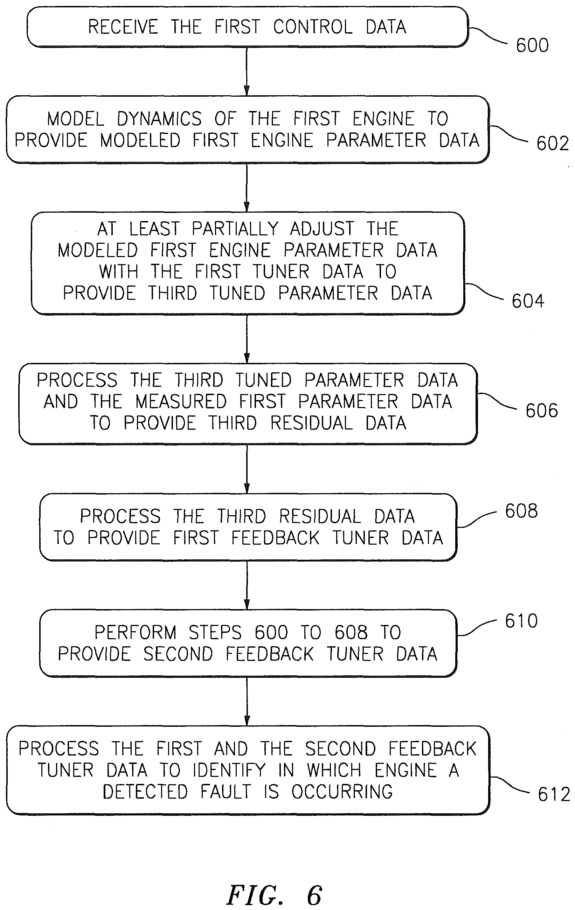

FIG. 6 illustrates a flow diagram of a method for identifying in which of the engines 14 and 16 the fault detected in step 416 is occurring. In step 600, the third modeling unit 90 receives the first control data 24. In step 602, the third modeling unit 90 models the dynamics of the first engine 14 by processing the first control data 24 and first feedback tuner data 98 with a third engine model to provide modeled first engine parameter data 100. The first feedback tuner data 98 is utilized to account for dynamic model error in the third engine model. The modeled first engine parameter data 100 includes modeled predictions of, for example, one or more of the parameter values that are measured by the first sensors 18 and included in the measured first engine parameter data 28.

In step 604, the summer 92 at least partially adjusts the modeled first engine parameter data 100 for model error in the third engine model to provide third tuned parameter data 102. The summer 92, for example, adds the first tuner data 60 to the modeled first engine parameter data 100 to provide the third tuned parameter data 102. The third tuned parameter data 102 includes the parameter values of the modeled first engine parameter data 100, which are biased with the first tuner data 60 to more closely match one or more of the parameter values of the measured first engine parameter data 28.

In step 606, the summer 82 processes the third tuned parameter data 102 and the measured first engine parameter data 28 to provide third residual data 104. The summer 82, for example, subtracts the third tuned parameter data 102 from the measured first engine parameter data 28 to provide the third residual data 104.

In step 608, the first feedback tuning unit 86 processes the third residual data 104 to provide the first feedback tuner data 98.

In step 610, the steps 600 to 608 are respectively performed for the fourth modeling unit 94, the summers 96 and 84 and the second feedback tuning unit 88. The fourth modeling unit 94, for example, receives the second control data 26. The fourth modeling unit 94 models the dynamics of the second engine 16 by processing the second control data 26 and second feedback tuner data 106 with a fourth engine model to provide modeled second engine parameter data 108 in a similar manner as described above with respect to the step 602. The summer 96 at least partially adjusts the modeled second engine parameter data 108 for model error in the fourth engine model to provide fourth tuned parameter data 110 in a similar manner as described above with respect to the step 604. The summer 84 processes the fourth tuned parameter data 110 and the measured second engine parameter data 30 to provide fourth residual data 112 in a similar manner as described above with respect to the step 606. The second feedback tuning unit 88 processes the fourth residual data 112 to provide the second feedback tuner data 106 in a similar manner as described above with respect to the step 608.

In step 612, the fault detection unit 56 processes the first feedback tuner data 98 and/or the second feedback tuner data 106 to identify in which of the engines 14 and 16 the fault detected in step 416 is occurring. The fault detection unit 56, for example, compares the first feedback tuner data 98 to first threshold data, and the second feedback tuner data 106 to second threshold data. Where one or more data points of the first feedback tuner data 98 is greater than and/or less than corresponding data points of the first threshold data, the fault detection unit 56 may determine the fault detected in the step 416 is occurring within the first engine 14. Where one or more data points of the second feedback tuner data 106 is greater than and/or less than corresponding data points of the second threshold data, the fault detection unit 56 may determine the fault detected in the step 416 is occurring within the second engine 16. In some embodiments, the first and/or the second threshold data may be predetermined. In other embodiments, the first and/or the second threshold data may each be dynamically determined based from, for example, an average of the respective feedback tuner data over a number of previous iterations of the method of FIG. 6.

In some embodiments, the fault detection unit 56 may identify the detected fault based on a signature of the engine correlation data 74. The fault detection unit 56, for example, may compare one or more data points of the engine correlation data 74 to corresponding data points stored from previous known engine faults. Where the data points of the engine correlation data 74 are similar to the data points stored for a previous known engine fault, the fault detection unit 56 may identify the detected fault as that known fault.

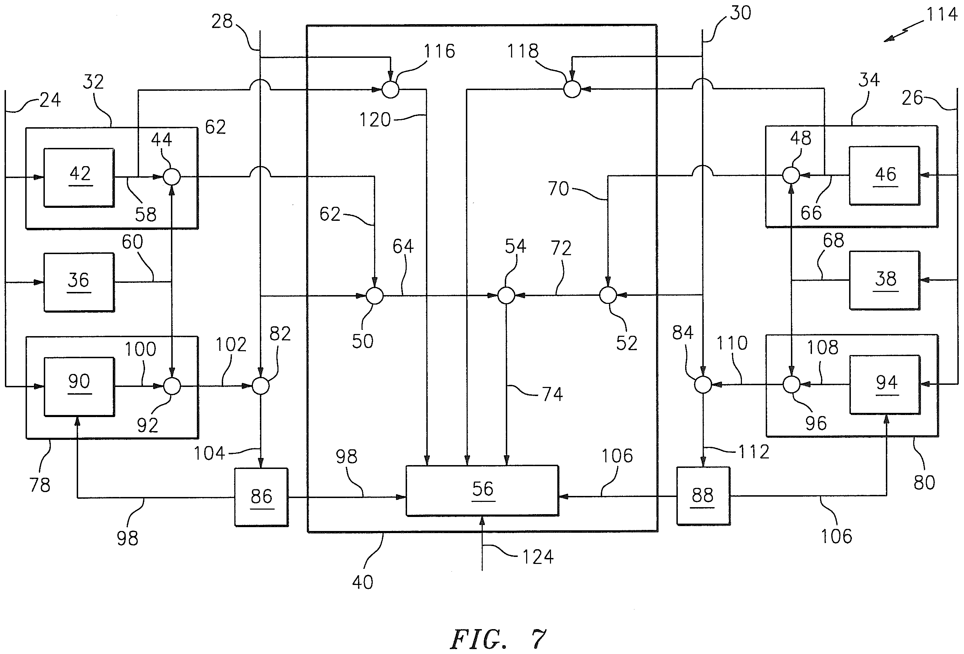

FIG. 7 illustrates an alternative embodiment engine monitor 114 for the multi-engine system 10 of FIG. 1. In contrast to the engine monitor 76 of FIG. 5, the engine monitor 114 further includes a plurality of summers 116 and 118. The summer 116 is configured in signal communication with the first modeling unit 42 and the first sensors 18 (see FIG. 1). The summer 118 is configured in signal communication with the second modeling unit 46 and the second sensors 20 (see FIG. 2).

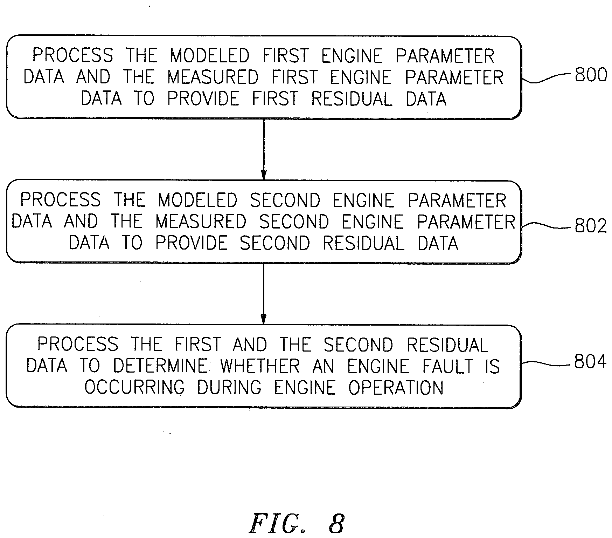

FIG. 8 illustrates a flow diagram of a method for operating the engine monitor 114 of FIG. 7 during, for example, steady-state conditions. In step 800, the summer 116 processes the modeled first engine parameter data 58 and the measured first engine parameter data 28 to provide first residual data 120. The summer 116, for example, subtracts the modeled first engine parameter data 58 from the measured first engine parameter data 28 to provide the first residual data 120.

In step 802, the summer 118 processes the modeled second engine parameter data 66 and the measured second engine parameter data 30 to provide second residual data 122. The summer 118, for example, subtracts the modeled second engine parameter data 66 from the measured second engine parameter data 30 to provide the second residual data 122.

In step 804, the fault detection unit 56 processes the first and second residual data 120 and 122 to determine whether a fault is occurring during engine 14, 16 operation. The fault detection unit 56, for example, subtracts the first residual data 120 from the second residual data 122 to provide engine correlation data. The fault detection unit 56 may subsequently compare this engine correlation data to threshold data to determine whether a fault is occurring during engine operation in a similar manner as described above with respect to step 416.

Where a fault occurs during engine 14, 16 operation, the respective controller 12, 13 (see FIG. 1) may generate updated control data 24, 26 to compensate for the engine fault. This updated control data 24, 26 may affect (e.g., corrupt) the tuner data 60, 68 provided by the tuning unit 36, 38 where, for example, the updates to the control data 24, 26 do not directly correspond to the engine fault. The method of FIG. 8 therefore may be utilized during transient conditions such that the tuner data 60, 68 does not affect the comparison between the modeled engine parameter data 58, 66 and the measured engine parameter data 28, 30.

In some embodiments, for example as illustrated in FIG. 7, the fault detection unit 56 may receive a control signal 124 indicative of whether the engines 14 and 16 are operating in steady-state or transient conditions. Where the engines 14 and 16 are operating in steady-state conditions, the control signal 124 may cause the engine monitor 114 to operate according to the method of FIG. 8. Where the engines 14 and 16 are operating in transient conditions, the control signal 124 may cause the engine monitor 114 to operate according to the method of FIGS. 4A and 4B. In alternative embodiments, the engine monitor 114 may operate according to the method of FIGS. 4A and 4B or FIG. 6 under steady-state and transient conditions.

In some embodiments, one or more or each of the modeling units 42, 46, 90 and 94 may model dynamics of the respective engines utilizing substantially the same types of state variable models. In other embodiments, one or more or each of the modeling units 42, 46, 90 and 94 may model dynamics of the respective engines utilizing different types of state variable models.

Various types of state variable models (SVMs) and empirical models are known in the art and may be utilized to implement the foregoing modeling units and the tuning units. Examples of such state variable models and/or empirical models are disclosed in U.S. Patent Nos. 7,277,838; 7,472,100; 7,415,328 and 7,216,071, each of which is hereby incorporated herein by reference. The present invention, of course, is not limited to any particular types of models.

One or more of the foregoing summers may be implemented individually or together using, for example, one or more adders, subtractors, arithmetic logic units (ALUs), arithmetic processing units (ALPs), etc.

One or more of the foregoing engine monitor components (e.g., modeling units, tuning units, summers, etc.) may be implement individually or together using hardware or a combination of hardware and software. The hardware may include, for example, one or more processors, analog and/or digital circuitry, memory, etc. Additionally, one or more of the engine monitor components may be combined with one or more other system components (e.g., the engine controllers 12, 13) into a single multifunctional device such as, for example, a central onboard computer. The present invention therefore is not limited to any particular types of hardware and/or software.

A person of ordinary skill in the art will recognize the engine monitor embodiments described above and illustrated in the drawings may be configured in multi-engine systems other than an aircraft propulsions system. The engine monitor, for example, may be configured to monitor companion engines of a multi-engine installation for marine vehicle propulsion, a twin pack configuration in a power generation application (e.g., two engines driving a single generator), etc. The present invention therefore is not limited to any particular multi-engine system types and/or configurations.

While various embodiments of the present invention have been disclosed, it will be apparent to those of ordinary skill in the art that many more embodiments and implementations are possible within the scope of the invention. For example, the present invention as described herein includes several aspects and embodiments that include particular features. Although these features may be described individually, it is within the scope of the present invention that some or all of these features may be combined within any one of the aspects and remain within the scope of the invention. Accordingly, the present invention is not to be restricted except in light of the attached claims and their equivalents.

## Claims

1. An engine monitor (22;76;114) for a first engine (14) configured to receive first control data (24) and a second engine (16) configured to receive second control data (26), the engine monitor (22;76;114) comprising:
a first tuned modeling unit (32) configured to model dynamics of the first engine (14) by processing the first control data (24) with a first engine model to provide modeled first engine parameter data (58), and configured to adjust at least partially the modeled first engine parameter data (58) for model error in the first engine model to provide first tuned parameter data (62);
a second tuned modeling unit (34) configured to model dynamics of the second engine (16) by processing the second control data (26) with a second engine model to provide modeled second engine parameter data (66), and configured to adjust at least partially the modeled second engine parameter data (66) for model error in the second engine model to provide second tuned parameter data (70);
a monitoring unit (40) configured to correlate the first tuned parameter data (62) and the second tuned parameter data (70) to monitor operation of the first and the second engines (14,16);
wherein the monitoring unit (40) is configured to correlate the first tuned parameter data (62) and the second tuned parameter data (70) by processing the first tuned parameter data (62) with measured first engine parameter data (28) to provide first residual data (64), processing the second tuned parameter data (70) with measured second engine parameter data (30) to provide second residual data (72), and processing the first and the second residual data (64,72) to provide engine correlation data (74); and **characterized in that** the monitoring unit (40) is configured to compare the engine correlation data (74) to threshold data, and is configured to determine whether a fault has occurred during operation of the first and the second engines (14,16) where one or more data points of the engine correlation data (74) are at least one of greater than and less than one or more corresponding data points of the threshold data.

2. The engine monitor (22;76;114) of claim 1, further comprising:
a first tuning unit (36) configured to provide first tuner data (60) based on the first control data (24); and
a second tuning unit (38) configured to provide second tuner data (68) based on the second control data (26), wherein the first tuned modeling unit (32) is configured to process the modeled first engine parameter data (58) with the first tuner data (60) to provide the first tuned parameter data (62) and the second tuned modeling unit (38) is configured to process the modeled second engine parameter data (66) with the second tuner data (68) to provide the second tuned parameter data (70).

3. The engine monitor (22;76;114) of claim 2, wherein the first tuning unit (36) comprises an empirical first tuning unit, and the second tuning unit (38) comprises an empirical second tuning unit.

4. The engine monitor (22;76;114) of claim 1, further comprising:
a third tuned modeling unit (78) that is configured to model the dynamics of the first engine (14) by processing the first control data (24) and first feedback tuner data (98) with a third engine model to provide additional modeled first engine parameter data, and configured to adjust at least partially the additional modeled first engine parameter data for model error in the third engine model to provide third tuned parameter data (102);
a first summer (82) configured to process the third tuned parameter data (102) and the measured first engine parameter data (28) to provide third residual data (104); and
a first feedback tuning unit (86) configured to process the third residual data (104) to provide the first feedback tuner data (86), wherein the monitoring unit (40) is configured to process the first feedback tuner data (98) to determine whether the fault is occurring within the first engine (14).

5. The engine monitor (22;76;114) of claim 4, further comprising:
a fourth tuned modeling unit (80) configured to model the dynamics of the second engine (16) by processing the second control data (26) and second feedback tuner data (106) with a fourth engine model to provide additional modeled second engine parameter data, and configured to adjust at least partially the additional modeled second engine parameter data for model error in the fourth engine model to provide fourth tuned parameter data (110);
a second summer (84) configured to process the fourth tuned parameter data (110) and the measured second engine parameter data (30) to provide fourth residual data (112); and
a second feedback tuning unit (88) configured to process the third residual data (104) to provide the second feedback tuner data (106), wherein the monitoring unit (40) is configured to process the second feedback tuner data (106) to determine whether the fault is occurring within the second engine (16).

6. The engine monitor (22;76;114) of claim 4 or 5, further comprising a first tuning unit (36) configured to provide first tuner data (60) based on the first control data (24), and wherein the third tuned modeling unit (78) is configured to process the additional modeled first engine parameter data (60) with the first tuner data to provide the third tuned parameter data (102).

7. The engine monitor (22;76;114) of any of claims 1 to 6, wherein the monitoring unit (40) is configured to identify the fault based on a signature of the engine correlation data (74).

8. The engine monitor (22;76;114) of any of claims 1 to 7, further comprising:
one or more first sensors (18) adapted to be arranged with the first engine (14), and configured to provide the measured first engine parameter data (28); and
one or more second sensors (20) adapted to be arranged with the second engine (16), and configured to provide the measured second engine parameter data (30).

9. The engine monitor (22;76;114) of any preceding claim, wherein
the monitoring unit (40) is configured to correlate the first and the second tuned parameter data (62,70) to monitor the operation of the first and the second engines (14,16) during transient conditions; and
the monitoring unit (40) is configured to process the modeled first engine parameter data (58) and the measured first engine parameter data (28) to provide first residual data, is configured to process the modeled second engine parameter data (66) and the measured second engine parameter data (30) to provide second residual data (72), and is configured to process the first and the second residual data (64,72) to monitor the operation of the first and the second engines (14,16) during steady-state conditions.

10. A multi-engine system (10) comprising:
the engine monitor (22;76;114) of any preceding claim; and
a plurality of companion engines including a first engine (14) that is controlled by the first control data (24) and a second engine (16) that is controlled by the second control data (26).

11. A method for monitoring a first engine (14) that receives first control data (24) and a second engine (16) that receives second control data (26), the method comprising:
modeling dynamics of the first engine (14) by processing the first control data (24) with a first engine model to provide modeled first engine parameter data (58);
at least partially adjusting the modeled first engine parameter data (58) for model error in the first engine model to provide first tuned parameter data (62);
modeling dynamics of the second engine (16) by processing the second control data (26) with a second engine model to provide modeled second engine parameter data (66);
at least partially adjusting the modeled second engine parameter data (66) for model error in the second engine model to provide second tuned parameter data (70); and
correlating the first tuned parameter data (62) and the second tuned parameter data (70) to monitor operation of the first and the second engines (14,16), wherein the modeling, the adjusting and the correlating are performed by an engine monitor (40) that includes one or more processors;
the correlating includes processing the first tuned parameter data with measured first engine parameter data to provide first residual data, processing the second tuned parameter data with measured second engine parameter data to provide second residual data, and processing the first and the second residual data to provide engine correlation data;
the measured first engine parameter data is received from one or more first sensors arranged with the first engine; and
the measured second engine parameter data is received from one or more second sensors arranged with the second engine; and **characterized by**
comparing the engine correlation data to threshold data; and
determining a fault is occurring during operation of the first and the second engines where one or more data points of the engine correlation data are at least one of greater than and less than one or more corresponding data points of the threshold data.

12. The method of claim 11, wherein the first and the second engines (14,16) are companion engines, the first engine (14) comprises a first turbine engine, and the second engine (16) comprises a second turbine engine.

13. The method of claim 11 or 12, further comprising:
providing empirical first tuner data (60) based on the first control data (24);
processing the modeled first engine parameter data (58) with the first tuner data (60) to provide the first tuned parameter data (62);
providing empirical second tuner data (68) based on the second control data (26); and
processing the modeled second engine parameter data (66) with the second tuner data (68) to provide the second tuned parameter data (70).

## Patentansprüche

1. Motormonitor (22; 76; 114) für einen ersten Motor (14), der zum Empfangen erster Steuerdaten (24) konfiguriert ist, und einen zweiten Motor (16), der zum Empfangen zweiter Steuerdaten (26) konfiguriert ist, wobei der Motormonitor (22; 76; 114) Folgendes umfasst:
eine erste abgestimmte Modellierungseinheit (32), die dazu konfiguriert ist, durch Verarbeiten der ersten Steuerdaten (24) mithilfe eines ersten Motormodells die Dynamik des ersten Motors (14) zu modellieren, um modellierte erste Motorparameterdaten (58) bereitzustellen, und dazu konfiguriert ist, die modellierten ersten Motorparameterdaten (58) zumindest teilweise um Modellfehler im ersten Motormodell anzupassen, um erste abgestimmte Parameterdaten (62) bereitzustellen;
eine zweite abgestimmte Modellierungseinheit (34), die dazu konfiguriert ist, durch Verarbeiten der zweiten Steuerdaten (26) mithilfe eines zweiten Motormodells die Dynamik des zweiten Motors (16) zu modellieren, um modellierte zweite Motorparameterdaten (66) bereitzustellen, und dazu konfiguriert ist, die modellierten zweiten Motorparameterdaten (66) zumindest teilweise um Modellfehler im zweiten Motormodell anzupassen, um zweite abgestimmte Parameterdaten (70) bereitzustellen;
eine Überwachungseinheit (40), die dazu konfiguriert ist, die ersten abgestimmten Parameterdaten (62) und die zweiten abgestimmten Parameterdaten (70) zu korrelieren, um den Betrieb des ersten und des zweiten Motors (14, 16) zu überwachen;
wobei die Überwachungseinheit (40) dazu konfiguriert ist, die ersten abgestimmten Parameterdaten (62) und die zweiten abgestimmten Parameterdaten (70) zu korrelieren, indem sie die ersten abgestimmten Parameterdaten (62) mithilfe gemessener erster Motorparameterdaten (28) verarbeitet, um erste Restdaten (64) bereitzustellen, die zweiten abgestimmten Parameterdaten (70) mithilfe gemessener zweiter Motorparameterdaten (30) verarbeitet, um zweite Restdaten (72) bereitzustellen, und die ersten und die zweiten Restdaten (64, 72) verarbeitet, um Motorkorrelationsdaten (74) bereitzustellen; und **dadurch gekennzeichnet, dass** die Überwachungseinheit (40) dazu konfiguriert ist, die Motorkorrelationsdaten (74) mit Schwellenwertdaten zu vergleichen, und dazu konfiguriert ist, zu bestimmen, ob während des Betriebs des ersten und des zweiten Motors (14, 16) eine Störung aufgetreten ist, wenn einer oder mehrere Datenpunkte der Motorkorrelationsdaten (74) zumindest entweder größer oder kleiner ausfallen als einer oder mehrere entsprechende Datenpunkte der Schwellenwertdaten.

2. Motormonitor (22; 76; 114) nach Anspruch 1, ferner umfassend:
eine erste Abstimmungseinheit (36), die dazu konfiguriert ist, auf Grundlage der ersten Steuerdaten (24) erste Abstimmungsdaten (60) bereitzustellen; und
eine zweite Abstimmungseinheit (38), die dazu konfiguriert ist, auf Grundlage der zweiten Steuerdaten (26) zweite Abstimmungsdaten (68) bereitzustellen, wobei die erste abgestimmte Modellierungseinheit (32) dazu konfiguriert ist, die modellierten ersten Motorparameterdaten (58) mithilfe der ersten Abstimmungsdaten (60) zu verarbeiten, um die ersten abgestimmten Parameterdaten (62) bereitzustellen, und die zweite abgestimmte Modellierungseinheit (38) dazu konfiguriert ist, die modellierten zweiten Motorparameterdaten (66) mithilfe der zweiten Abstimmungsdaten (68) zu verarbeiten, um die zweiten abgestimmten Parameterdaten (70) bereitzustellen.

3. Motormonitor (22; 76; 114) nach Anspruch 2, wobei die erste Abstimmungseinheit (36) eine empirische erste Abstimmungseinheit umfasst und die zweite Abstimmungseinheit (38) eine empirische zweite Abstimmungseinheit umfasst.

4. Motormonitor (22; 76; 114) nach Anspruch 1, ferner umfassend:
eine dritte abgestimmte Modellierungseinheit (78), die dazu konfiguriert ist, durch Verarbeiten der ersten Steuerdaten (24) und erster Rückkopplungs-Abstimmungsdaten (98) mithilfe eines dritten Motormodells die Dynamik des ersten Motors (14) zu modellieren, um zusätzliche modellierte erste Motorparameterdaten bereitzustellen, und dazu konfiguriert ist, die zusätzlichen modellierten ersten Motorparameterdaten zumindest teilweise um Modellfehler im dritten Motormodell anzupassen, um dritte abgestimmte Parameterdaten (102) bereitzustellen;
ein erster Summierer (82), der dazu konfiguriert ist, die dritten abgestimmten Parameterdaten (102) und die gemessenen ersten Motorparameterdaten (28) zu verarbeiten, um dritte Restdaten (104) bereitzustellen; und
eine erste Rückkopplungs-Abstimmungseinheit (86), die dazu konfiguriert ist, die dritten Restdaten (104) zu verarbeiten, um die ersten Rückkopplungs-Abstimmungsdaten (86) bereitzustellen, wobei die Überwachungseinheit (40) dazu konfiguriert ist, die ersten Rückkopplungs-Abstimmungsdaten (98) zu verarbeiten, um zu bestimmen, ob die Störung im ersten Motor (14) auftritt.

5. Motormonitor (22; 76; 114) nach Anspruch 4, ferner umfassend:
eine vierte abgestimmte Modellierungseinheit (80), die dazu konfiguriert ist, durch Verarbeiten der zweiten Steuerdaten (26) und zweiter Rückkopplungs-Abstimmungsdaten (106) mithilfe eines vierten Motormodells die Dynamik des zweiten Motors (16) zu modellieren, um zusätzliche modellierte zweite Motorparameterdaten bereitzustellen, und dazu konfiguriert ist, die zusätzlichen modellierten zweiten Motorparameterdaten zumindest teilweise um Modellfehler im vierten Motormodell anzupassen, um vierte abgestimmte Parameterdaten (110) bereitzustellen;
einen zweiten Summierer (84), der dazu konfiguriert ist, die vierten abgestimmten Parameterdaten (110) und die gemessenen zweiten Motorparameterdaten (30) zu verarbeiten, um vierte Restdaten (112) bereitzustellen; und
eine zweite Rückkopplungs-Abstimmungseinheit (88), die dazu konfiguriert ist, die dritten Restdaten (104) zu verarbeiten, um die zweiten Rückkopplungs-Abstimmungsdaten (106) bereitzustellen, wobei die Überwachungseinheit (40) dazu konfiguriert ist, die zweiten Rückkopplungs-Abstimmungsdaten (106) zu verarbeiten, um zu bestimmen, ob die Störung im zweiten Motor (16) auftritt.

6. Motormonitor (22; 76; 114) nach Anspruch 4 oder 5, ferner umfassend eine erste Abstimmungseinheit (36), die dazu konfiguriert ist, auf Grundlage der ersten Steuerdaten (24) erste Abstimmungsdaten (60) bereitzustellen, und wobei die dritte abgestimmte Modellierungseinheit (78) dazu konfiguriert ist, die zusätzlichen modellierten ersten Motorparameterdaten (60) mithilfe der ersten Abstimmungsdaten zu verarbeiten, um die dritten abgestimmten Parameterdaten (102) bereitzustellen.

7. Motormonitor (22; 76; 114) nach einem der Ansprüche 1 bis 6, wobei die Überwachungseinheit (40) dazu konfiguriert ist, die Störung auf Grundlage einer Signatur der Motorkorrelationsdaten (74) zu identifizieren.

8. Motormonitor (22; 76; 114) nach einem der Ansprüche 1 bis 7, ferner umfassend:
einen oder mehrere erste Sensoren (18), die dazu ausgelegt sind, mit dem ersten Motor (14) angeordnet zu sein, und dazu konfiguriert sind, die gemessenen ersten Motorparameterdaten (28) bereitzustellen; und
einen oder mehrere zweite Sensoren (20), die dazu ausgelegt sind, mit dem zweiten Motor (16) angeordnet zu sein, und dazu konfiguriert sind, die gemessenen zweiten Motorparameterdaten (30) bereitzustellen.

9. Motormonitor (22; 76; 114) nach einem der vorhergehenden Ansprüche, wobei
die Überwachungseinheit (40) dazu konfiguriert ist, die ersten und die zweiten abgestimmten Parameterdaten (62, 70) zu korrelieren, um den Betrieb des ersten und des zweiten Motors (14, 16) während Übergangsbedingungen zu überwachen; und
die Überwachungseinheit (40) dazu konfiguriert ist, die modellierten ersten Motorparameterdaten (58) und die gemessenen ersten Motorparameterdaten (28) zu verarbeiten, um erste Restdaten bereitzustellen, dazu konfiguriert ist, die modellierten zweiten Motorparameterdaten (66) und die gemessenen zweiten Motorparameterdaten (30) zu verarbeiten, um zweite Restdaten (72) bereitzustellen, und dazu konfiguriert ist, die ersten und die zweiten Restdaten (64, 72) zu verarbeiten, um den Betrieb des ersten und des zweiten Motors (14, 16) während stationärer Bedingungen zu überwachen.

10. Mehrmotoriges System (10), umfassend:
den Motormonitor (22; 76; 114) nach einem der vorhergehenden Ansprüche; und
eine Vielzahl sich ergänzender Motoren, einschließlich eines ersten Motors (14), der durch die ersten Steuerdaten (24) gesteuert wird, und eines zweiten Motors (16), der durch die zweiten Steuerdaten (26) gesteuert wird.

11. Verfahren zum Überwachen eines ersten Motors (14), der erste Steuerdaten (24) empfängt, und eines zweiten Motors (16), der zweite Steuerdaten (26) empfängt, wobei das Verfahren Folgendes umfasst:
Modellieren der Dynamik des ersten Motors (14) durch Verarbeiten der ersten Steuerdaten (24) mithilfe eines ersten Motormodells zum Bereitstellen modellierter erster Motorparameterdaten (58);
zumindest teilweises Anpassen der modellierten ersten Motorparameterdaten (58) um Modellfehler im ersten Motormodell zum Bereitstellen erster abgestimmter Parameterdaten (62);
Modellieren der Dynamik des zweiten Motors (16) durch Verarbeiten der zweiten Steuerdaten (26) mithilfe eines zweiten Motormodells zum Bereitstellen modellierter zweiter Motorparameterdaten (66);
zumindest teilweises Anpassen der modellierten zweiten Motorparameterdaten (66) um Modellfehler im zweiten Motormodell zum Bereitstellen zweiter abgestimmter Parameterdaten (70); und
Korrelieren der ersten abgestimmten Parameterdaten (62) und der zweiten abgestimmten Parameterdaten (70) zum Überwachen des Betriebs des ersten und des zweiten Motors (14, 16), wobei das Modellieren, das Anpassen und das Korrelieren von einem Motormonitor (40) durchgeführt werden, der einen oder mehrere Prozessoren beinhaltet;
wobei das Korrelieren ein Verarbeiten der ersten abgestimmten Parameterdaten mithilfe gemessener erster Motorparameterdaten zum Bereitstellen erster Restdaten, ein Verarbeiten der zweiten abgestimmten Parameterdaten mithilfe gemessener zweiter Motorparameterdaten zum Bereitstellen zweiter Restdaten und ein Verarbeiten der ersten und der zweiten Restdaten zum Bereitstellen von Motorkorrelationsdaten beinhaltet;
wobei die gemessenen ersten Motorparameterdaten von einem oder mehreren ersten Sensoren empfangen werden, die mit dem ersten Motor angeordnet sind; und
die gemessenen zweiten Motorparameterdaten von einem oder mehreren zweiten Sensoren empfangen werden, die mit dem zweiten Motor angeordnet sind; und **gekennzeichnet durch**
Vergleichen der Motorkorrelationsdaten mit Schwellenwertdaten; und
Bestimmen, dass während des Betriebs des ersten und zweiten Motors eine Störung auftritt, wenn einer oder mehrere Datenpunkte der Motorkorrelationsdaten zumindest entweder größer oder kleiner ausfallen als einer oder mehrere entsprechende Datenpunkte der Schwellenwertdaten.

12. Verfahren nach Anspruch 11, wobei der erste und der zweite Motor (14, 16) einander ergänzende Motoren sind, wobei der erste Motor (14) einen ersten Turbinenmotor umfasst und der zweite Motor (16) einen zweiten Turbinenmotor umfasst.

13. Verfahren nach Anspruch 11 oder 12, ferner umfassend:
Bereitstellen empirischer erster Abstimmungsdaten (60) auf Grundlage der ersten Steuerdaten (24);
Verarbeiten der modellierten ersten Motorparameterdaten (58) mithilfe der ersten Abstimmungsdaten (60) zum Bereitstellen der ersten abgestimmten Parameterdaten (62);
Bereitstellen empirischer zweiter Abstimmungsdaten (68) auf Grundlage der zweiten Steuerdaten (26); und
Verarbeiten der modellierten zweiten Motorparameterdaten (66) mithilfe der zweiten Abstimmungsdaten (68) zum Bereitstellen der zweiten abgestimmten Parameterdaten (70).

## Revendications

1. Dispositif de contrôle de moteur (22 ; 76 ; 114) pour un premier moteur (14) configuré pour recevoir des premières données de commande (24) et un second moteur (16) configuré pour recevoir des secondes données de commande (26), le dispositif de contrôle de moteur (22 ; 76 ; 114) comprenant :
une première unité de modélisation réglée (32) configurée pour modéliser la dynamique du premier moteur (14) en traitant les premières données de commande (24) avec un premier modèle de moteur pour fournir des premières données de paramètre de moteur modélisées (58), et configurée pour régler au moins partiellement les premières données de paramètre de moteur modélisées (58) pour une erreur de modèle dans le premier modèle de moteur pour fournir des premières données de paramètre réglées (62) ;
une deuxième unité de modélisation réglée (34) configurée pour modéliser la dynamique du second moteur (16) en traitant les secondes données de commande (26) avec un deuxième modèle de moteur pour fournir des secondes données de paramètre de moteur modélisées (66), et configurée pour régler au moins partiellement les secondes données de paramètre de moteur modélisées (66) pour une erreur de modèle dans le deuxième modèle de moteur pour fournir des deuxièmes données de paramètre réglées (70) ;
une unité de contrôle (40) configurée pour corréler les premières données de paramètre réglées (62) et les deuxièmes données de paramètre réglées (70) pour contrôler le fonctionnement du premier et du second moteurs (14, 16) ;
dans lequel l'unité de contrôle (40) est configurée pour corréler les premières données de paramètre réglées (62) et les deuxièmes données de paramètre réglées (70) en traitant les premières données de paramètre réglées (62) avec des premières données de paramètre de moteur mesurées (28) pour fournir des premières données résiduelles (64), en traitant les deuxièmes données de paramètre réglées (70) avec des secondes données de paramètre de moteur mesurées (30) pour fournir des deuxièmes données résiduelles (72), et en traitant les premières et les deuxièmes données résiduelles (64, 72) pour fournir des données de corrélation de moteur (74) ; et **caractérisé en ce que** l'unité de contrôle (40) est configurée pour comparer les données de corrélation de moteur (74) avec des données de seuil, et est configurée pour déterminer si un défaut s'est produit pendant le fonctionnement du premier et du second moteurs (14, 16) où un ou plusieurs points de données des données de corrélation de moteur (74) sont au moins soit supérieurs soit inférieurs à un ou plusieurs points de données correspondants des données de seuil.

2. Dispositif de contrôle de moteur (22 ; 76 ; 114) selon la revendication 1, comprenant en outre :
une première unité de réglage (36) configurée pour fournir des premières données de syntoniseur (60) sur la base des premières données de commande (24) ; et
une seconde unité de réglage (38) configurée pour fournir des secondes données de syntoniseur (68) sur la base des secondes données de commande (26), dans lequel la première unité de modélisation réglée (32) est configurée pour traiter les premières données de paramètre de moteur modélisées (58) avec les premières données de syntoniseur (60) pour fournir les premières données de paramètre réglées (62) et la deuxième unité de modélisation réglée (38) est configurée pour traiter les secondes données de paramètre de moteur modélisées (66) avec les secondes données de syntoniseur (68) pour fournir les deuxièmes données de paramètre réglées (70).

3. Dispositif de contrôle de moteur (22 ; 76 ; 114) selon la revendication 2, dans lequel la première unité de réglage (36) comprend une première unité de réglage empirique, et la seconde unité de réglage (38) comprend une seconde unité de réglage empirique.

4. Dispositif de contrôle de moteur (22 ; 76 ; 114) selon la revendication 1, comprenant en outre :
une troisième unité de modélisation réglée (78) qui est configurée pour modéliser la dynamique du premier moteur (14) en traitant les premières données de commande (24) avec des premières données de syntoniseur de rétroaction (98) avec un troisième modèle de moteur pour fournir des premières données de paramètre de moteur modélisées supplémentaires, et configurée pour régler au moins partiellement les premières données de paramètre de moteur modélisées supplémentaires pour une erreur de modèle dans le troisième modèle de moteur pour fournir des troisièmes données de paramètre réglées (102) ;
un premier sommateur (82) configuré pour traiter les troisièmes données de paramètre réglées (102) et les premières données de paramètre de moteur mesurées (28) pour fournir des troisièmes données résiduelles (104) ; et
une première unité de réglage de rétroaction (86) configurée pour traiter les troisièmes données résiduelles (104) pour fournir les premières données de syntoniseur de rétroaction (86), dans lequel l'unité de contrôle (40) est configurée pour traiter les premières données de syntoniseur de rétroaction (98) pour déterminer si le défaut se produit à l'intérieur du premier moteur (14).

5. Dispositif de contrôle de moteur (22 ; 76 ; 114) selon la revendication 4, comprenant en outre :
une quatrième unité de modélisation réglée (80) configurée pour modéliser la dynamique du second moteur (16) en traitant les secondes données de commande (26) et les secondes données de syntoniseur de rétroaction (106) avec un quatrième modèle de moteur pour fournir des secondes données de paramètre de moteur modélisées supplémentaires, et configurée pour régler au moins partiellement les secondes données de paramètre de moteur modélisées supplémentaires pour une erreur de modèle dans le quatrième modèle de moteur pour fournir des quatrièmes données de paramètre réglées (110) ;
un second sommateur (84) configuré pour traiter les quatrièmes données de paramètre réglées (110) et les secondes données de paramètre de moteur mesurées (30) pour fournir des quatrièmes données résiduelles (112) ; et
une seconde unité de réglage de rétroaction (88) configurée pour traiter les troisièmes données résiduelles (104) pour fournir les secondes données de syntoniseur de rétroaction (106), dans lequel l'unité de contrôle (40) est configurée pour traiter les secondes données de syntoniseur de rétroaction (106) pour déterminer si le défaut se produit à l'intérieur du second moteur (16).

6. Dispositif de contrôle de moteur (22 ; 76 ; 114) selon la revendication 4 ou 5, comprenant en outre une première unité de réglage (36) configurée pour fournir les premières données de syntoniseur (60) sur la base des premières données de commande (24), et dans lequel la troisième unité de modélisation réglée (78) est configurée pour traiter les premières données de paramètre de moteur modélisées supplémentaires (60) avec les premières données de syntoniseur pour fournir les troisièmes données de paramètre réglées (102) .

7. Dispositif de contrôle de moteur (22 ; 76 ; 114) selon l'une quelconque des revendications 1 à 6, dans lequel l'unité de contrôle (40) est configurée pour identifier le défaut sur la base d'une signature des données de corrélation de moteur (74) .

8. Dispositif de contrôle de moteur (22 ; 76 ; 114) selon l'une quelconque des revendications 1 à 7, comprenant en outre :
un ou plusieurs premiers capteurs (18) conçus pour être agencés avec le premier moteur (14), et configurés pour fournir les premières données de paramètre de moteur mesurées (28) ; et
un ou plusieurs seconds capteurs (20) conçus pour être agencés avec le second moteur (16), et configurés pour fournir les secondes données de paramètre de moteur mesurées (30).

9. Dispositif de contrôle de moteur (22 ; 76 ; 114) selon une quelconque revendication précédente, dans lequel
l'unité de contrôle (40) est configurée pour corréler les premières et les deuxièmes données de paramètre réglées (62, 70) pour contrôler le fonctionnement du premier et du second moteurs (14, 16) dans des états transitoires ; et
l'unité de contrôle (40) est configurée pour traiter les premières données de paramètre de moteur modélisées (58) et les premières données de paramètre de moteur mesurées (28) pour fournir les premières données résiduelles, est configurée pour traiter les secondes données de paramètre de moteur modélisées (66) et les secondes données de paramètre de moteur mesurées (30) pour fournir les deuxièmes données résiduelles (72), et est configurée pour traiter les premières et les deuxièmes données résiduelles (64, 72) pour contrôler le fonctionnement du premier et du second moteurs (14, 16) dans des états stables.

10. Système à moteurs multiples (10) comprenant :
le dispositif de contrôle de moteur (22 ; 76 ; 114) selon une quelconque revendication précédente ; et
une pluralité de moteurs auxiliaires comportant un premier moteur (14) qui est commandé par les premières données de commande (24) et un second moteur (16) qui est commandé par les secondes données de commande (26).

11. Procédé de contrôle d'un premier moteur (14) qui reçoit des premières données de commande (24) et d'un second moteur (16) qui reçoit des secondes données de commande (26), le procédé comprenant :
la modélisation de la dynamique du premier moteur (14) en traitant les premières données de commande (24) avec un premier modèle de moteur pour fournir les premières données de paramètre de moteur modélisées (58) ;
le réglage au moins partiel des premières données de paramètre de moteur modélisées (58) pour une erreur de modèle dans le premier modèle de moteur pour fournir les premières données de paramètre réglées (62) ;
la modélisation de la dynamique du second moteur (16) en traitant les secondes données de commande (26) avec un deuxième modèle de moteur pour fournir les secondes données de paramètre de moteur modélisées (66) ;
le réglage au moins partiel des secondes données de paramètre de moteur modélisées (66) pour une erreur de modèle dans le deuxième modèle de moteur pour fournir les deuxièmes données de paramètre réglées (70) ; et
la corrélation des premières données de paramètre réglées (62) et des deuxièmes données de paramètre réglées (70) pour contrôler le fonctionnement du premier et du second moteurs (14, 16), dans lequel la modélisation, le réglage et la corrélation sont effectués par un dispositif de contrôle de moteur (40) qui comporte un ou plusieurs processeurs ;
la corrélation comporte le traitement des premières données de paramètre réglées avec les premières données de paramètre de moteur mesurées pour fournir les premières données résiduelles, le traitement des deuxièmes données de paramètre réglées avec les secondes données de paramètre de moteur mesurées pour fournir les deuxièmes données résiduelles, et le traitement des premières et des deuxièmes données résiduelles pour fournir les données de corrélation de moteur ;
les premières données de paramètre de moteur mesurées sont reçues à partir d'un ou de plusieurs premiers capteurs agencés avec le premier moteur ; et
les secondes données de paramètre de moteur mesurées sont reçues à partir d'un ou de plusieurs seconds capteurs agencés avec le second moteur ; et **caractérisé par**
la comparaison des données de corrélation de moteur avec les données de seuil ; et
la détermination qu'un défaut se produit pendant le fonctionnement du premier et du second moteurs, où un ou plusieurs points de données des données de corrélation de moteur sont au moins soit supérieurs soit inférieurs à un ou plusieurs points de données correspondants des données de seuil.

12. Procédé selon la revendication 11, dans lequel le premier et le second moteurs (14, 16) sont des moteurs auxiliaires, le premier moteur (14) comprend un premier moteur à turbine et le second moteur (16) comprend un second moteur à turbine.

13. Procédé selon la revendication 11 ou 12, comprenant en outre :
la fourniture des premières données de syntoniseur empiriques (60) sur la base des premières données de commande (24) ;
le traitement des premières données de paramètre de moteur modélisées (58) avec les premières données de syntoniseur (60) pour fournir les premières données de paramètre réglées (62) ;
la fourniture des secondes données de syntoniseur empiriques (68) sur la base des secondes données de commande (26) ; et
le traitement des secondes données de paramètre de moteur modélisées (66) avec les secondes données de syntoniseur (68) pour fournir les deuxièmes données de paramètre réglées (70).
